# EUROPEAN PATENT APPLICATION

(11) **EP 1 638 016 A1**
(43) Date of publication of application: **22.03.2006**
(21) Application number: 04292944.8
(22) Date of filing: 10.12.2004
(51) Int. Cl.: G06F 17/30

(54) **Methods and systems for filtering URLs, webpages, and content**

(30) Priority: 15.09.2004 US 609843
(71) Applicant: PCSafe Inc., Phoenix, Arizona 85037 (US)
(72) Inventor: Klein, William H., Lachine QC H8R 1P3 (CA); Gotts, John W., Portland, Oregon 97210-3203 (US)
(74) Representative: Becker, Philippe

(57) **Abstract**

The present invention relates to novel methods and systems useful for filtering URLs, webpages, and/or content. In one aspect, the invention provides methods for obtaining webpages from one or more web search engines in response to a search request; comparing the webpages against a database of categorized webpages, wherein the categorized webpages comprise two or more categories of webpages selected from the group consisting of webpages with adware, webpages with spyware, phishing webpages, webpages with tracking software, webpages with web browser hijackers, webpages with viruses, webpages with Trojan horses, and/or webpages with worms; and providing webpages from the obtaining step. The categorized webpages may further comprise content from categories comprising webpages with content selected from one or more of the group consisting of banners, spiders, adult content, pornography, violence, vulgarity, spam, spim, sponsored webpages, pop-ups, spammed webpages, and/or pop-unders.

## Description

### REFERENCE TO RELATED APPLICATION

The present application claims priority benefit under 35 U.S.C §119(e) from U.S. Provisional Application No. 60/609,843, filed September 15, 2004, entitled *"METHODS AND SYSTEMS FOR FILTERING URLS, WEBPAGES, AND CONTENT."*

### BACKGROUND OF THE INVENTION

Computers or electronic devices that access information over a network, such as the Internet, generally utilize a software interface that permits the user to direct the operation of the computer in obtaining information from the network or in accessing databases. In the case of the Internet, a network browser program is conventionally utilized as an interface which provides the user with controls for navigating the network and displays on the user's computer information derived from the network.

Content displayed in the browser is generally provided by various webpages from various locations in the network. This information can generally include text, graphics, sound files, video files, and other data. Included in the textual data obtained from the network and displayed in a webpage are labels, conventionally known as hyperlinks. These hyperlinks are associated with Uniform Resource Locator (URL) addresses which point to other locations of information in the network.

Users navigate through the network by selecting a hyperlink displayed in the browser and the browser then loads the corresponding URL and downloads the webpage or other data associated therewith. Users may also navigate by typing in a URL into the address bar of the browser.

Toolbars are a common feature associated with computer browsers. Toolbars allow a user to "bookmark" webpages, as well as search databases and receive mail. Often, such toolbars are brand-specific. For example, Yahoo!® and google® have each developed a toolbar with brand-specific features.

Computer browser toolbars have only been generally used for navigating the Internet, accessing general information, and providing other generic features (i.e., email, etc.). As the Internet grows in size, it has become a more integral part of organizational operations. Attacks on computers by hackers are growing. Furthermore, the attacks are growing beyond the current capability of security management tools to identify and quickly respond to those attacks. As various attack methods are tried and ultimately repelled, the attackers will attempt new approaches with more varied and sophisticated attack features. Thus, maintaining computer security is ongoing, ever changing, and an increasingly complex problem. Computer users are also increasingly subjected to unsolicited, unsavory content such as violence or pornography. Such users may not be interested in unsolicited content and hence, would prefer to not be exposed to it without their permission.

Computer attacks can take many forms and any one attack may include many security events of different types. Security events are anomalous network conditions each of which may cause an anti-security effect to a computer. Security events may include, but are not limited to, stealing confidential or private information, producing damage through mechanisms such as viruses, worms, or Trojan horses, overwhelming the computer's capacities in order to cause denial of service, and so forth. Furthermore, attacks may be made in the form of spyware, adware, browser-hijackers, viruses, Trojan horses, and the like.

There is thus a need for a web browser toolbar that allows users to more effectively combat a broad range of potential security threats such as adware, spyware, phishing webpages, webpages with tracking software, webpages with web browser hijackers, webpages with viruses, webpages with Trojan horses, and webpages with worms.

### SUMMARY OF THE INVENTION

The present invention relates to novel methods and systems useful for filtering URLs, webpages, and/or content. In one aspect, the invention provides methods for obtaining webpages from one or more web search engines in response to a search request; comparing the webpages against a database of categorized webpages, wherein the categorized webpages comprise two or more categories of webpages selected from the group consisting of webpages with adware, webpages with spyware, phishing webpages, webpages with tracking software, webpages with web browser hijackers, webpages with viruses, webpages with Trojan horses, and/or webpages with worms; and providing webpages from the obtaining step. The categorized webpages may further comprise content from categories comprising webpages with content selected from one or more of the group consisting of banners, spiders, adult content, pornography, violence, vulgarity, spam, spim, sponsored webpages, pop-ups, spammed webpages, and/or pop-unders.

The providing step may further comprise displaying a webpage to a user. This displaying may also display webpages not in the database of categorized webpages. The displaying may also display webpages in the database of categorized webpages wherein the webpages when displayed are marked as members of the category. The providing step may further comprise displaying at least one webpage in the categorized database of webpages where content in the categories may be redacted. The providing step may further comprise displaying a list of webpages received from a search engine. The displaying step may also display the webpages according to a display template. This template may organize the webpages according to the content in the webpages. The templates may vary according to the content associated with the list of webpages. In a further embodiment, the displaying may further present small image of each webpage with the list of webpages. In another embodiment, a user may enlarge the small image prior to opening the webpage. In another embodiment the webpages that are found to be in the database of categorized webpages are not included in a list of webpages, while in another embodiment the webpages are included in a list of webpages. In yet another embodiment, the webpages in the list are not active or in another embodiment the webpages are active. In a further embodiment, the categorized webpages in the list are marked showing inclusion in a category. In yet a further embodiment, the providing step includes providing advertisements with the webpages.

In another embodiment, the search request may be made from an Internet browser toolbar. In such an embodiment, a user may elect to restrict or allow a category of webpages from the providing step.

In a further embodiment, a user has a saved profile. Associated with this saved profile, a user may elect to restrict or allow a category of webpages or webpage content from the providing step. This saved profile may be password protected. The saved profile may be related to cookies, Favorites, or webpage history saved on a user's computer. In another embodiment, the toolbar includes a pull down menu comprising the name of each user, wherein the names are associated with a user's profile and wherein the user's profile may be selected when the user's name is selected from a pull down menu. In a further embodiment, the toolbar allows the user to designate a webpage as in a category in the database of categorized webpages. In yet another embodiment, the designated categorized webpage may be added to the database of categorized webpages.

In a further embodiment, the database of categorized webpages resides on a user's computer. In another embodiment, the database of categorized webpages resides on a network computer. The database of categorized content may be updated regularly with categorized webpages. The database of categorized webpages is updated from a master categorized webpage database. The categorized webpages in the database are collected from one or more of the group consisting of user feedback, manual input of known categorized webpages, automated input from a web crawler, third party feedback, and updates from third party compilation of categorized webpages. The categorized webpages in the database are updated from one or more of the group consisting of user feedback, manual input of known categorized webpages, input from a web crawler, and third party compilations. In yet another aspect, the categorized webpage database is selected from the group consisting of a table, an XML file, and a flat file.

Another embodiment further comprises determining whether webpages from the search result that are not in the database of categorized webpages should be in the database of categorized webpages. Another embodiment may provide for adding webpages from the determining step that should be in the database of categorized webpages to the database of categorized webpages. In another aspect, webpages that should be in the database of categorized webpages are distributed across a network to related databases. Yet another embodiment provides for distributing the webpages with categorized content to a master categorized webpage database. In a further aspect, the determining step further comprises opening the search result in a web browser and monitoring data for categorized content. This monitoring step may be performed manually or automatically. In another embodiment, the categorized content is selected from the group consisting of spyware, adware, sponsored webpages, banners, adult content, pornographic webpages, violent webpages, vulgar webpages, spammed webpages, robots, spiders, viruses, Trojan horses, worms, malware, tracking software, spam, phishing webpages, web browser hijackers, and/or pop-ups.

Another aspect of the present invention provides for a system comprising a first module configured to obtain webpages from one or more search engines in response to a search request; a second module configured to compare the webpages against a database of categorized webpages, wherein the categorized webpages comprise two or more categories of webpages selected from the group consisting of webpages with adware, webpages with spyware, phishing webpages, webpages with tracking software, webpages with web browser hijackers, webpages with viruses, webpages with Trojan horses, and/or webpages with worms; and, a third module for providing webpages from the search results. The database of categorized webpages may further comprise webpages with categorized content selected from one or more of the group consisting of banners, spiders, adult content, pornography, violence, vulgarity, spam, spim, sponsored webpages, pop-ups, spammed webpages, and/or pop-unders. Another embodiment may further comprise a fourth module for analyzing search results that do not match one or more entrants in the database of categorized content; and, a fifth module for reporting newly discovered categorized webpages comprising categorized content to the database of categorized webpages.

Another embodiment of the present invention provides a method comprising obtaining webpages from one or more search engines in response to a search query; identifying categorized webpages in the search results from a database of categorized webpages, wherein the categorized webpages comprise two or more categories of webpages selected from the group consisting of webpages with adware, webpages with spyware, phishing webpages, webpages with tracking software, webpages with web browser hijackers, webpages with viruses, webpages with Trojan horses, and webpages with worms; parsing the categorized webpages from webpages obtained from the obtaining step; and providing webpages from the search results. The database of categorized webpages may further comprise webpages with content selected from one or more of the group consisting of banners, spiders, adult content, pornography, violence, vulgarity, spam, spim, sponsored webpages, pop-ups, spammed webpages, and/or pop-unders.

Another embodiment of the present invention provides a method comprising obtaining URLs from one or more web search engines in response to a search request; comparing the URLs against a database of categorized URLs, wherein the categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and/or webpages with worms; and providing URLs from the search result. The database of categorized URLs may further comprise one or more URLs linked to content selected from one or more of the group consisting of banners, spiders, adult content, pornography, violence, vulgarity, spam, spim, sponsored webpages, pop-ups, spammed webpages, and/or pop-unders.

Another embodiment of the present invention provides a system comprising a first module configured to obtain URLs from one or more web search engines in response to a search request; a second module configured to determine whether the URLs match one or more entrants in a database of categorized content, wherein the categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and/or webpages with worms; and a third module for providing search results. The database of categorized URLs may further comprise one or more URLs linked to content selected from one or more of the group consisting of banners, spiders, adult content, pornography, violence, vulgarity, spam, spim, sponsored webpages, pop-ups, spammed webpages, and/or pop-unders. The system may further comprise a fourth module for analyzing search results that do not match one or more entrants in a database of categorized content; and a fifth module for reporting newly discovered categorized content to the database of categorized URLs.

Another embodiment of the present invention provides a method for obtaining URLs from one or more search engines in response to a search query; identifying categorized URLs in the search results from a database of categorized URLs, wherein the categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and/or webpages with worms; parsing the categorized URLs from URLs obtained from the obtaining step; and providing webpages from the search results. The database of categorized URLs further comprises URLs linked to content selected from one or more of the group consisting of banners, spiders, adult content, pornography, violence, vulgarity, spam, spim, sponsored webpages, pop-ups, spammed webpages, and/or pop-unders.

Another embodiment of the present invention provides a method for comparing a URL against a database of categorized URLs, wherein the categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and/or webpages with worms; and providing the URL if it does not match any categorized URLs in the database.

Another embodiment of the present invention provides a method for receiving a search request from a user; sending the search request to at least one search engine; receiving at least one URL from the search engines in response to the search request; comparing the URLs against a database of categorized URLs, wherein the categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and/or webpages with worms; and displaying URLs that do not match categorized URLs in the database;

Another embodiment of the present invention provides a method for comparing each URL in a database of URLs against each URL in a database of categorized URLs; marking each URL in the database of URLs that match categorized URLs in the database of categorized URLs, wherein the categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms; and providing URLs, wherein a marked URL is identified as matching a categorized URL. The method may further comprise displaying the URLs to a user. The method may also provide for marking the URLs that are displayed to a user with a visual marker identifying the URL as categorized. In another aspect the marked URLs are not displayed to a user.

Another embodiment of the present invention provides a computer readable medium having stored thereon a computer program that, when executed, causes a computer to perform the steps of: receiving at least one URL; comparing each URL against a database of categorized URLs, wherein the categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms; and providing URLs that do not match any categorized URLs in the database.

Another embodiment of the present invention provides a computer data signal embodied in a transmission medium for enabling a computer to filter search results comprising: receiving at least one URL; comparing each URL against a database of categorized URLs, wherein the categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms; and providing URLs that do not match any categorized URLs in the database.

Another embodiment of the present invention provides a computer system for: receiving at least one URL; comparing each URL against a database of categorized URLs, wherein the categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms; and providing URLs that do not match any categorized URLs in the database.

Yet another embodiment provides a method for obtaining a webpage in response to a user typing in a URL or in response to a user selecting a hyperlink. Comprising, comparing the webpage against a database of categorized webpages, wherein the categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms; displaying the webpage if the webpage is not in the database of categorized webpages; and reporting to the user if the webpage is in the database of categorized webpages, wherein the user may elect to restrict or allow the webpage.

Yet another embodiment provides a method for obtaining search results from one or more web search engines in response to a search request, comprising, comparing content of the results against a database of categorized content, wherein the categorized content is selected from two or more of the group consisting of adware, spyware, phishing webpages, tracking software, web browser hijackers, viruses, Trojan horses, and/or worms; and providing search results. The database of categorized content may further comprise one or more of the group consisting of banners, spiders, adult content, pornography, violence, vulgarity, spam, spim, sponsored webpages, pop-ups, spammed webpages, and/or pop-unders.

Yet another embodiment provides a system comprising a first module configured to obtain search results from one or more web search engines in response to a search request; a second module configured to determine whether content the results match one or more entrants in a database of categorized content, wherein the categorized content is selected from two or more of the group consisting of adware, spyware, phishing webpages, tracking software, web browser hijackers, viruses, Trojan horses, and/or worms; and/or a third module for providing search results. The database of categorized content may further comprise one or more items selected from the group consisting of banners, spiders, adult content, pornography, violence, vulgarity, spam, spim, sponsored webpages, pop-ups, spammed webpages, and/or pop-unders. The embodiment may further provide a fourth module for analyzing search results that do not match one or more entrants in the database of categorized content; and a fifth module for reporting newly discovered categorized content to the database.

Yet another embodiment provides a method for obtaining search results from one or more search engines in response to a search query, comprising, identifying categorized content in the search results from a database of categorized content, wherein the categorized content is selected from two or more of the group consisting of adware, spyware, phishing webpages, tracking software, web browser hijackers, viruses, Trojan horses, and/or worms; parsing the search results identified to contain categorized content; and providing search results. The database of categorized content may further comprises one or more items selected from the group consisting of banners, spiders, viruses, adult content, pornography, violence, vulgarity, Trojan horses, worms, spam, phishing, web browser hijackers, pop-ups, and/or pop-unders.

Another embodiment provides a method for obtaining URLs from one or more web search engines in response to a search request. comprising, comparing the URLs against a database of categorized URLs, wherein the categorized content is selected from two or more of the group consisting of adware, spyware, phishing webpages, tracking software, web browser hijackers, viruses, Trojan horses, and/or worms; and providing URLs from the search result. The database of categorized URLs may further comprise one or more URLs linked to content selected from one or more of the group consisting of banners, spiders, adult content, pornography, violence, vulgarity, spam, spim, sponsored webpages, pop-ups, spammed webpages, and/or pop-unders.

Yet another embodiment provides for a system comprising a first module configured to obtain URLs from one or more web search engines in response to a search request; a second module configured to determine whether categorized content linked to the URLs matches one or more entrants in a database of categorized content, wherein the categorized content is selected from two or more of the group consisting of adware, spyware, phishing webpages, tracking software, web browser hijackers, viruses, Trojan horses, and/or worms; and a third module for providing search results. The database of categorized URLs may further comprise one or more URLs linked to content selected from one or more of the group consisting of banners, spiders, adult content, pornography, violence, vulgarity, spam, spim, sponsored webpages, pop-ups, spammed webpages, and/or pop-unders. The system may further comprise a fourth module for analyzing search results that do not match one or more entrants in a database of categorized content; and a fifth module for reporting newly discovered categorized content to the database of categorized URLs.

Yet another embodiment provides a method for obtaining URLs from one or more search engines in response to a search query. comprising, identifying categorized URLs in the search results from a database of categorized URLs, wherein the categorized content is selected from two or more of the group consisting of adware, spyware, phishing webpages, tracking software, web browser hijackers, viruses, Trojan horses, and/or worms; parsing the categorized URLs from URLs obtained from the obtaining step; and providing webpages from the search results. The database of categorized URLs further comprises URLs linked to content selected from one or more of the group consisting of banners, spiders, adult content, pornography, violence, vulgarity, spam, spim, sponsored webpages, pop-ups, spammed webpages, and/or pop-unders.

Yet another embodiment provides a method for obtaining results from one or more web search engines in response to a search request. comprising, comparing content of the results against a database of categorized content, wherein the categorized content is selected from two or more of the group consisting of adware, spyware, phishing webpages, tracking software, web browser hijackers, viruses, Trojan horses, and/or worms; and providing search results. The database of categorized content further comprises one or more of the group consisting of banners, spiders, adult content, pornography, violence, vulgarity, spam, spim, sponsored webpages, pop-ups, spammed webpages, and/or pop-unders.

Yet another embodiment provides a method for obtaining search results from one or more search engines in response to a search query. comprising, identifying categorized content in the search results from a database of categorized content, wherein the categorized content is selected from two or more of the group consisting of adware, spyware, phishing webpages, tracking software, web browser hijackers, viruses, Trojan horses, and/or worms; and, looking for identifiers in the search results associated with categorized content; parsing the search results identified to contain categorized content; and providing search results. The database of categorized content may further comprise one or more items selected from the group consisting of banners, spiders, adult content, pornography, violence, vulgarity, spam, spim, sponsored webpages, pop-ups, spammed webpages, and/or pop-unders.

Yet another embodiment provides a system for providing a first module configured to obtain URLs from one or more web search engines in response to a search request. Comprising, a second module configured to determine whether the URLs matches one or more entrants in a database of categorized URLs, wherein the categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms; and a third module for providing search results. The database of categorized URLs may further comprise one or more URLs linked to content selected from one or more of the group consisting of banners, spiders, adult content, pornography, violence, vulgarity, spam, spim, sponsored webpages, pop-ups, spammed webpages, and/or pop-unders. The system may further comprise a fourth module for analyzing search results that do not match one or more entrants in a database of categorized content; and a fifth module for reporting newly discovered categorized URLs to the database of categorized URLs.

Yet another embodiment provides a method for obtaining URLs from one or more search engines in response to a search query. comprising, identifying categorized URLs in the search results from a database of categorized URLs, wherein the categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms; parsing the categorized URLs from URLs obtained from the obtaining step; and providing webpages from the search results. The database of categorized URLs may further comprise URLs linked to content selected from one or more of the group consisting of banners, spiders, adult content, pornography, violence, vulgarity, spam, spim, sponsored webpages, pop-ups, spammed webpages, and/or pop-unders.

Yet another embodiment provides a method comprising comparing a URL against a database of categorized URLs, wherein the categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms; and providing the URL if it does not match any categorized URLs in the database.

Yet another embodiment provides a method comprising receiving a search request from a user; sending the search request to at least one search engine; receiving at least one URLs from the search engines in response to the search request; comparing the URLs against a database of categorized URLs, wherein the categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms; and displaying URLs that do not match categorized URLs in the database.

Yet another embodiment provides a method comprising comparing each URL in a database of URLs against each URL in a database of categorized URLs; marking each URL in the database of URLs that match categorized URLs in the database of categorized URLs, wherein the categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms; and providing URLs, wherein a marked URL is identified as matching a categorized URL. The URLs may be displayed to a user. The marked URLs may also be displayed to a user with a visual marker identifying the URL as categorized. Another embodiment may provide that the marked URLs are not displayed to a user.

Yet another embodiment provides for a computer readable medium comprising stored thereon a computer program that, when executed, causes a computer to perform the steps of: receiving at least one URL; comparing each URL against a database of categorized URLs, wherein the categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms; and providing URLs that do not match any categorized URLs in the database.

Yet another embodiment provides for a computer data signal embodied in a transmission medium for enabling a computer to filter search results comprising receiving at least one URL; comparing each URL against a database of categorized URLs, wherein the categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms; and providing URLs that do not match any categorized URLs in the database.

Yet another embodiment provides for a computer system comprising receiving at least one URL; comparing each URL against a database of categorized URLs, wherein the categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms; and providing URLs that do not match any categorized URLs in the database.

Yet another embodiment provides a method comprising obtaining a webpage in response to a user typing in a URL or in response to a user selecting a hyperlink; comparing the webpage against a database of categorized webpages, wherein the categorized webpages point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms; displaying the webpage if the webpage is not in the database of categorized webpages; and reporting to the user if the webpage is in the database of categorized webpages, wherein the user may elect to restrict or allow the webpage.

Yet another embodiment provides a method comprising obtaining search results from one or more web search engines in response to a search request; comparing content of the results against a database of categorized content, wherein the categorized content is selected from two or more of the group consisting of adware, spyware, phishing webpages, tracking software, web browser hijackers, viruses, Trojan horses, and worms; and providing search results. The database of categorized content may further comprise one or more of the group consisting of banners, spiders, adult content, pornography, violence, vulgarity, spam, spim, sponsored webpages, pop-ups, spammed webpages, and/or pop-unders.

Yet another embodiment provides a system comprising a first module configured to obtain search results from one or more web search engines in response to a search request; a second module configured to determine whether content the results match one or more entrants in a database of categorized content, wherein the categorized content is selected from two or more of the group consisting of adware, spyware, phishing webpages, tracking software, web browser hijackers, viruses, Trojan horses, and worms; and a third module for providing search results. The database of categorized content may further comprises one or more items selected from the group consisting of banners, spiders, adult content, pornography, violence, vulgarity, spam, spim, sponsored webpages, pop-ups, spammed webpages, and/or pop-unders. The system may further comprise a fourth module for analyzing search results that do not match one or more entrants in the database of categorized content; and a fifth module for reporting newly discovered categorized content to the database of categorized content.

Yet another embodiment provides a method comprising obtaining search results from one or more search engines in response to a search query; identifying categorized content in the search results from a database of categorized content, wherein the categorized content is selected from two or more of the group consisting of adware, spyware, phishing webpages, tracking software, web browser hijackers, viruses, Trojan horses, and worms; parsing the search results identified to contain categorized content; and providing search results. The database of categorized content may further comprise one or more items selected from the group consisting of banners, spiders, viruses, adult content, pornography, violence, vulgarity, Trojan horses, worms, spam, phishing, web browser hijackers, pop-ups, and/or pop-unders.

Yet another embodiment provides a method comprising obtaining URLs from one or more web search engines in response to a search request; comparing content linked to the URLs against a database of categorized content, wherein the categorized content is selected from two or more of the group consisting of adware, spyware, phishing webpages, tracking software, web browser hijackers, viruses, Trojan horses, and worms; and providing URLs from the search result. The database of categorized content may further comprise content selected from one or more of the group consisting of banners, spiders, adult content, pornography, violence, vulgarity, spam, spim, sponsored webpages, pop-ups, spammed webpages, and/or pop-unders.

Yet another embodiment provides a system comprising a first module configured to obtain URLs from one or more web search engines in response to a search request; a second module configured to determine whether content linked to the URLs matches one or more entrants in a database of categorized content, wherein the categorized content is selected from two or more of the group consisting of adware, spyware, phishing webpages, tracking software, web browser hijackers, viruses, Trojan horses, and worms; and a third module for providing search results. The database of categorized content may further comprise one or more selected from one or more of the group consisting of banners, spiders, adult content, pornography, violence, vulgarity, spam, spim, sponsored webpages, pop-ups, spammed webpages, and/or pop-unders. The system may further comprise a fourth module for analyzing search results that do not match one or more entrants in the database of categorized content; and a fifth module for reporting newly discovered categorized content to the database of categorized content.

Yet another embodiment provides a method comprising obtaining URLs from one or more search engines in response to a search query; identifying whether content linked to the URLs matches one or more entrants in a database of categorized content, wherein the categorized content is selected from two or more of the group consisting of adware, spyware, phishing webpages, tracking software, web browser hijackers, viruses, Trojan horses, and worms; parsing URLs identified in the identifying step from URLs obtained from the obtaining step; and providing webpages from the search results. The database of categorized content further comprise one or more selected from one or more of the group consisting of banners, spiders, adult content, pornography, violence, vulgarity, spam, spim, sponsored webpages, pop-ups, spammed webpages, and/or pop-unders

Yet another embodiment provides a method comprising obtaining results from one or more web search engines in response to a search request; comparing content of the results against a database of categorized content, wherein the categorized content is selected from two or more of the group consisting of adware, spyware, phishing webpages, tracking software, web browser hijackers, viruses, Trojan horses, and worms and providing search results. The database of categorized content may further comprise one or more of the group consisting of banners, spiders, adult content, pornography, violence, vulgarity, spam, spim, sponsored webpages, pop-ups, spammed webpages, and/or pop-unders.

Yet another embodiment provides a method comprising obtaining search results from one or more search engines in response to a search query; identifying categorized content in the search results from a database of categorized content, wherein the categorized content is selected from two or more of the group consisting of adware, spyware, phishing webpages, tracking software, web browser hijackers, viruses, Trojan horses, and worms; and looking for identifiers in the search results associated with categorized content; parsing the search results identified to contain categorized content; and providing search results. The database of categorized content may further comprise one or more items selected from the group consisting of banners, spiders, adult content, pornography, violence, vulgarity, spam, spim, sponsored webpages, pop-ups, spammed webpages, and/or pop-unders.

### BRIEF DESCRIPTION OF THE DRAWINGS

FIG. 1 is flowchart showing the steps of obtaining URLs, comparing them with a database, and providing the URLs to a user.
FIG. 2 is a flowchart showing the steps of obtaining URLs, comparing them with a database, and displaying the URLs to a user.
FIG. 3 is a flowchart showing the steps of obtaining URLs, comparing URLs, marking matched URLs, and displaying URLs.
FIG. 4 is a flowchart showing the steps of obtaining URLs, comparing URLs, removing matched URLs, and providing URLs.
FIG. 5 is a flowchart showing the steps of obtaining URLs, comparing URLs, and providing URLs along with advertisements.
FIG. 6 is a flowchart showing the steps of obtaining URLs, comparing URLs, inactivating matching URLs, and displaying URLs to a user.
FIG. 7 is a flowchart showing the steps of FIG. 4 including communication with a master categorized URL database.
FIG. 8 is a flowchart showing how a user may allow or restrict content content on webpages.
FIG. 9 is a flowchart showing restricted URLs being marked prior to being displayed.
FIG. 10 is a flowchart showing how URLs may be marked depending on the database.
FIG. 11 is a flowchart showing how a user may elect to restrict or allow webpages and updating the databases.
FIG. 12 is a flowchart showing the steps of opening a webpage and adding pages with restricted content to categorized URL database.
FIG. 13 is a flowchart showing the steps of FIG. 12 including the steps of receiving a search request and receiving the search results.
FIG. 14 is a flowchart showing a number of remote categorized webpage databases all communicating with a master categorized webpage database.
FIG. 15 is a flowchart showing the process of marking URLs in a URL database that match webpages in a categorized URL database.
FIG. 16 is a flowchart showing the steps of obtaining URLs, comparing them with a database, displaying the URLs to a user, and redacting any restricted content.

### DETAILED DESCRIPTION OF THE INVENTION

It is to be understood that the present invention is not limited to the particular methodology, systems, uses, and applications, described herein, as these may vary. It is also to be understood that the terminology used herein is used for the purpose of describing particular embodiments only, and is not intended to limit the scope of the present invention. It must be noted that as used herein and in the appended claims, the singular forms "a," "an," and "the" include the plural reference unless the context clearly dictates otherwise. Thus, for example, a reference to "an embodiment" is a reference to one or more embodiments and includes equivalents thereof known to those skilled in the art. Similarly, for another example, a reference to "a step" or "a means" is a reference to one or more steps or means and may include sub-steps and subservient means. All conjunctions used are to be understood in the most inclusive sense possible. Thus, the word "or" should be understood as having the defmition of a logical "or" rather than that of a logical "exclusive or" unless the context clearly necessitates otherwise. Structures described herein are to be understood also to refer to functional equivalents of such structures. Language that may be construed to express approximation should be so understood unless the context clearly dictates otherwise.

Unless defined otherwise, all technical and scientific terms used herein have the same meanings as commonly understood by one of ordinary skill in the art to which this invention belongs. Specific methods, techniques, devices, and systems are described, although any methods, techniques, devices, or systems similar or equivalent to those described herein may be used in the practice or testing of the present invention. Structures described herein are to be understood also to refer to all equivalents of such structures. All references cited herein are incorporated by reference herein in their entirety.

The letters "URL", when used in the context of the present invention, are an acronym for "Uniform Resource Locator" and refer to a World Wide Web address for a webpage on the Internet. In the context of this invention, URL further includes hypertext. The URL may be in any readable format including text, binary, or hexadecimal formats. It may be stored in electronic or magnetic media or presented as an electrical signal.

The term "webpage", when used in the context of the present invention, refers to an organized data file of information capable of presentation on the world wide web containing or including, among other things, text, graphics, hyperlinks, programs, videos, music or other multimedia data and is pointed to by a URL. The data may be organized in any number of formats including hypertext markup language (htm or html), a word processor file, flash or vector animation, postscript data file (pdf), any image file, any video file, any audio file, any text file, any other data presentation format, or any combination of the above. Furthermore, new file types that are in harmony with the embodiments of the present invention are included in this definition.

The term "content", when used in the context of the present invention, refers to information contained within a webpage including text, graphics, images, hyperlinks, videos, music, or other data. Furthermore, new file types that are in harmony with the embodiments of the present invention are included in this definition.

The term "categorized content", when used in the context of the present invention, includes content that is organized into categories thereby enabling a user to restrict or allow categories of content rather than specific instances of content. Such categories may include, but are not limited to, adware, spyware, phishing, tracking software, web browser hijackers, viruses, Trojan horses, worms, banners, spiders, adult themes, obscenity, racism, sexism, nudity, pornography, violence, vulgarity, spam, spim, sponsored webpages, pop-ups, spam, and/or pop-unders. Furthermore, new categories of content that are in harmony with the embodiments of the present invention are included in this definition.

The term "categorized webpage", when used in the context of the present invention, includes webpages organized into categories thereby enabling a user to restrict or allow categories of webpages rather than specific instances of webpages. Such categories may include webpages with adware or spyware, phishing webpages, webpages with tracking software, webpages with web browser hijackers, webpages with viruses, webpages with Troj an horses, webpages with worms, spam, spim, sponsored webpages, pop-ups, spammed webpages, pop-unders and/or webpages with the following: banners, spiders, adult themes, obscenity, racism, sexism, nudity, pornography, violence, vulgarity. Furthermore, new categories of content that are in harmony with the embodiments of the present invention are included in this definition.

The term "browser", when used in the context of the present invention, includes a software application used to locate and display Webpages. The two most popular browsers are Internet Explorer® and Netscape Navigator®. Other web browsers such as Watermelon®, XANA®, Camino®, Safari®, Mozilla Firefox®, America Online®, Lynx®, Konqueror®, and/or Opera® are included in this definition without limitation. These are graphical browsers that display graphics as well as text. In addition, most browsers also present multimedia information including sound and video, though they may require plug-ins for some formats.

The term "spyware", when used in the context of the present invention refers to any software that gathers user information through the user's Internet connection. The software may be bundled as a hidden component of freeware or shareware programs that is downloaded from the Internet. "Spyware" also includes software that monitors user activity on the Internet and transmits that information in the background to a third party. The software may also gather information about email addresses, passwords and/or credit card numbers. The term further includes software that exists as independent executable programs, has the ability to monitor keystrokes, scans files on the hard drive, snoops other applications, such as chat programs or word processors, installs other programs, reads cookies, and/or changes the default home page on the Web browser. This information may then be relayed back to a third party that may use it, for example, for advertising/marketing purposes or sell the information to another party.

The term "adware", when used in the context of the present invention, includes software that is a subset of spyware that displays advertisements to a user and/or collects and provide user information to a third party.

The term "phishing", when used in the context of the present invention, includes webpages that contain fraudulent solicitations for account information such as credit card numbers, passwords or other personal information, by impersonating the domain or email content of a company to which a user has entrusted the storage of such data.

The term "tracking software", when used in the context of the present invention, includes software that tracks and/or monitors web browser usage and may communicate such information to a third party.

The term "web browser hijacker", when used in the context of the present invention, includes any software that resets a browser's settings to point to other webpages. Hijackers may reroute information and/or address requests through an unseen webpage, thus capturing that information. In such hijacks, a browser may behave normally but slower. Three specific exemplars of web browser hijackers are: search hijackers, which change the search settings on a user's web browser or computer; homepage hijackers, which change the user's home page to some other webpage; and error hijackers, which display a different error page when a requested URL is not found.

The term "virus", when used in the context of the present invention, includes software that is capable of reproducing itself and usually capable of interfering with files and/or programs on a computer.

The term "spim", when used in the context of the present invention, includes an unsolicited commercial instant message that pops up during an instant-message conversation. "Spim" also includes bulk messages sent to instant-messaging accounts and chat rooms.

The term "Trojan horse", when used in the context of the present invention, includes a software program containing additional hidden code, which allows the unauthorized collection, exploitation, falsification, and/or destruction of data.

The term "worm", when used in the context of the present invention, includes a software program capable of reproducing itself and spreading from one computer to another over a network by taking advantage of automatic file sending and receiving features found on many computers.

The term "pop-up", when used in the context of the present invention, includes a browser window that appears unrequested by the user on the user's screen. Pop-ups are commonly used for advertisements. Pop-ups may also spring to life when a user leaves a webpage or when a user closes a browser window.

The term "pop-under", when used in the context of the present invention, includes a pop-up window that when opened is displayed behind another open window.

The term "toolbar", when used in the context of the present invention, includes a series of selectable buttons, icons, pull-down menus, windows, and other GUI interfaces, in a GUI that gives a user an easy way to select desktop, application or Web browser functions. Toolbars are typically displayed as either a horizontal row or a vertical column around the edges of the GUI where they are visible while the application is in use.

The terms "sponsored webpage", when used in the context of the present invention, includes webpages that are given priority in a search result typically for paid or other consideration rather than search relevance.

The terms "spammed webpage", when used in the context of the present invention, includes webpages that are given artificially high relevance in regard to a search request. Such pages may be artificially high because of phony links to the webpage, misused meta-tags and/or other misleading usage that tends to increase webpages relevance in a search result.

Particular objects of this invention include a method comprising:
obtaining webpages from one or more web search engines in response to a search request;
comparing said webpages against a database of categorized webpages, wherein said categorized webpages comprise two or more categories of webpages selected from the group consisting of webpages with adware, webpages with spyware, phishing webpages, webpages with tracking software, webpages with web browser hijackers, webpages with viruses, webpages with Trojan horses, and webpages with worms; and
providing webpages from said comparing step.

In particular embodiments of the above method :
- said categorized webpages further comprise content from categories comprising webpages with content selected from one or more of the group consisting of banners, spiders, adult content, pornography, violence, vulgarity, spam, spim, sponsored webpages, pop-ups, spammed webpages, and pop-unders, and/or
- said providing step further comprises displaying a webpage to a user. The displaying step can display webpages not in said database of categorized webpages or can display webpages in said database of categorized webpages wherein said webpages when displayed are marked as members of said category, and/or
- said providing step further comprises displaying at least one webpage in said categorized database of webpages where content in said categories may be redacted, and/or
- said providing step further comprises displaying a list comparing at least one webpages received from said search engine. Said displaying step can display said webpages according to a display template. Said template typically organizes said webpages according to content in said webpages and/or each template varies according to the content associated with said list of webpages. Thedisplaying step can present a small image of each webpage within said list of webpages. A user may enlarge said small image. In a particular embodiment, webpages in said database of categorized webpages are not included in said list of webpages. In an other embodiment, webpages in said database of categorized webpages are included in said list of webpages. Said categorized webpages included in said list may be active or not. The categorized webpages included in said list my be marked showing inclusion in said category.
- the method further comprises restricting a category of webpages from said providing step, and/or
- the method further comprises allowing a category of webpages from said providing step, and/or
- the method further comprises allowing a category of webpages from said providing step, and/or
- the method further comprises restricting a category of webpage content from said providing step, and/or
- the method further comprises allowing a category of webpage content from said providing step, and/or
- the method further comprises restricting a webpage from said providing step, and/or
- the method further comprises allowing a webpage from said providing step, and/or
- the method further comprises restricting a URL from said providing step, and/or
- the method further comprises allowing a URL from said providing step, and/or
- the search request is made from an Internet browser toolbar. In a particular embodiment, an individual user of said toolbar has a saved profile which may be password protected and/or records categories of webpages said user elects to restrict and/or records categories of webpages said user elects to allow and/or records webpage said user elects to restrict, and/or records webpage said user elects to allow, and/or records URLs said user elects to restrict and/orrecords URLs said user elects to allow and/or is related to cookies stored on a user's computer and/or may be related to Favorites stored on a user's computer and/or saved profile is related to a webpage history stored on a user's computer. The toolbar may comprise a pull down menu listing the name of each user, wherein said names are associated with a user's profile, and wherein said user's profile may be selected when said user's name is selected from said pull down menu. The toolbar may allow a user to designate a webpage as in a category in said database of categorized webpages. Said designated categorized webpage may be added to said database of categorized webpages. The toolbar may allow a user to create a category in said database of categorized webpages, and/or
- the database of categorized webpages resides on a user's computer, and/or
- the database of categorized webpages resides on a network computer, and/or
- the database is updated regularly with categorized webpages, and/or
- the method further comprises the step of updating said database of categorized webpages from a master categorized webpage database. Said master categorized webpage database may be accessed across a network, and/or
- the categorized webpages in said database are collected from one or more of the group consisting of user feedback, manual input of known categorized webpages, automated input from a web crawler, third party feedback, and updates from third party compilation of categorized webpages, and/or
- the categorized webpages in said database are updated from one or more of the group consisting of user feedback, manual input of known categorized webpages, input from a web crawler, and third party compilations.
- said providing step comprises providing advertisements with said webpages, and/or
- the database is selected from the group consisting of a table, an XML file, and a flat file, and/or
- the method further comprises determining whether webpages from said search result that are not in said database of categorized webpages should be in said database of categorized webpages. Such method may further comprise adding webpages from said determining step to said database of categorized webpages and, optionally, distributing said added webpages found in said webpage across a network to related databases. The method may also further comprise distributing webpages found in said webpage to a master categorized webpage database and/or distributing webpages that should be in said database of categorized webpages to master categorized webpage database. In a particular embodiment, the determining step further comprises: opening a webpage corresponding to said search result in a web browser; and monitoring data associated with said web page for categorized content. The monitoring step may be performed manually or automatically. Also, the categorized content may be selected from one or more of the group consisting of spyware, adware, sponsored webpages, banners, adult content, pornographic webpages, violent webpages, vulgar webpages, spammed webpages, robots, spiders, viruses, Trojan horses, worms, malware, tracking software, spam, phishing webpages, web browser hijackers, and pop-ups.

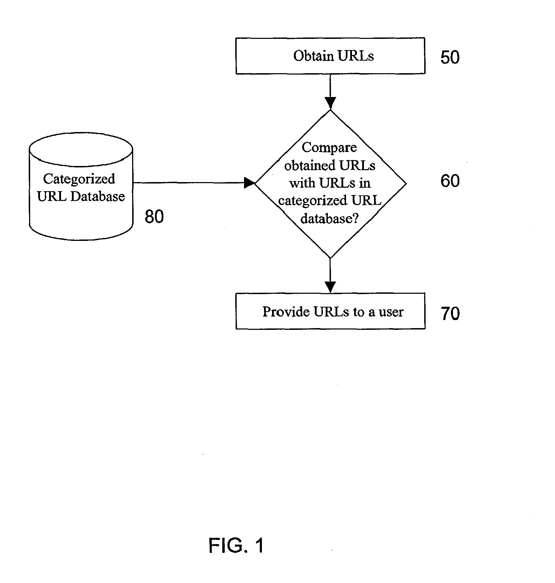

Referring to the figures, FIG. 1 shows a flowchart representing a method of the present invention. The method includes the steps of obtaining one or more URLs 50, comparing obtained URLs 60 with URLs in the categorized URL database 80, and providing URLs to a user 70. The step of comparing obtained URLs 60 with URLs in categorized URL database 80 compares each obtained URL with each URL in the database.

The URLs in the categorized URL database 80 may include two or more URLs that point to webpages with the following content: adware, spyware, phishing webpages, webpages with tracking software, webpages with web browser hijackers, webpages with viruses, webpages with Trojan horses, and/or webpages with worms. The categorized URL database may also contain 3 or more, 4 or more, 5 or more, 6 or more, 7 or more, or 8 or more URLs associated with the above mentioned webpages. The categorized URL database may further comprise webpages associated with content such as banners, spiders, adult content, pornography, violence, vulgarity, spam, spim, sponsored webpages, pop-ups, spammed webpages, and/or pop-unders. As technology develops so do Internet related threats. These new unforeseen threats are included herewith.

Any number of software systems including web browsers, email software, word processors, spreadsheets, database management software, or proprietary software may obtain the URLs. The URLs may be obtained from a search engine in response to a search request, a listing of webpages, a document of hypertext links, or any other software mechanism capable of providing URLs.

The categorized URL database 80 of the present invention may be a table, decision tree, case based database, flat file, or any other database type file. The database may be relational or object oriented. It may be comprised of text, XML, binary, and/or hexadecimal data. The categorized URL database 80 is structured for the fastest possible searches and comparisons. The categorized URL database 80 may be located on the user's computer or located on a remote server for access by a number of users. The categorized URL database 80 may also contain URLs, URL categories, thumbnail images of the webpage associated with the URL, description of the webpage, cache of known webpages, and/or the threat level of the URL.

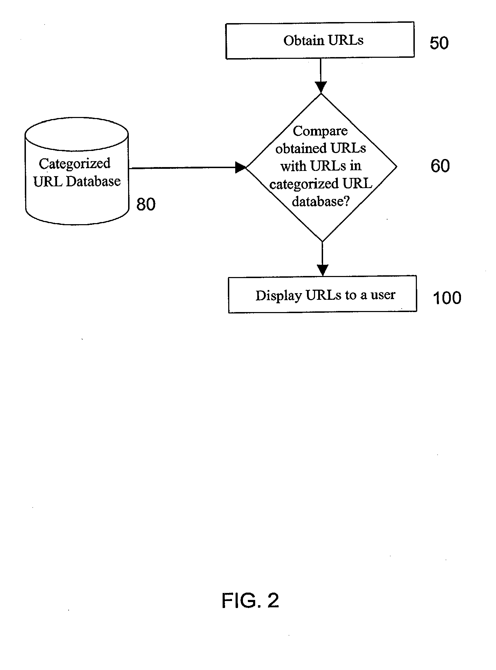

FIG. 2 shows a flowchart where the URLs are displayed to a user 100. The difference between the flowcharts shown here in FIG. 2 and in FIG. 1 is the URLs are displayed to a user in FIG. 2 while in FIG. 1 the URLs are provided to a user. Providing URLs, as in FIG. 1, includes saving the URLs in an electronic file, emailing the URLs, sending the URLs across a network, or providing the URLs in a software routine where further manipulation or computation on the URLs is performed by the processor. URLs may be displayed, as in FIG. 1, in a web browser, via email, in a text document, or any other displaying means. Such displaying means may be, for example, in a web browser such as Internet Explorer®, Netscape Navigator®, Watermelon®, XANA®, Camino®, Safari®, Mozilla Firefox®, America Online®, Lynx®, Konqueror®, or Opera®. Those skilled in the art will recognize various displaying means are available.

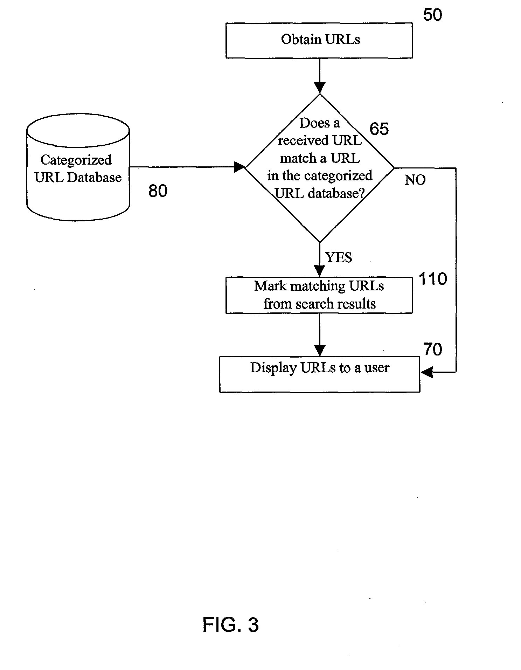

FIG. 3 shows another flowchart depicting an embodiment that includes marking URLs, at step 110, that match URLs in the categorized URL database 80. URLs that do not match URLs in the categorized URL database 80 are displayed directly to a user at step 70. Accordingly, URLs that match URLs in the categorized URL database 80 are marked prior to display to a user. Marked URLs, therefore, alert a user that the URL is in a category. The marking may also mark the URL as included in a category.

For instance, URLs may be provided to a user on a webpage in a web browser, where each URL is a string of hypertext. Matched URLs may be marked in a number of different ways. For example, matched URLs may be displayed with a different color on the webpage. The matched URLs may have a red flag or another warning symbol next to the URL or hypertext on the webpage. The marking may be a string of text describing the type of categorized content that is associated with the URL. There are many other means of marking URLs in a webpage that are known in the art.

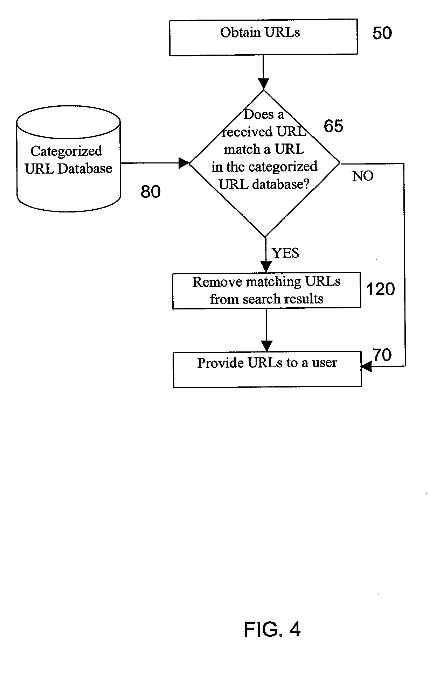

FIG. 4 shows another flowchart representing another embodiment of the present invention, where matched URLs are not marked. Rather, matched URLs are removed or parsed 120 from the group of obtained URLs. Such a step isolates a user from URLs that exist in the database of categorized URLs. If an obtained URL matches a URL in the database of categorized URLs, then this URL will be removed prior to providing the unmatched URLs to a user. For example, suppose the database of categorized URLs contains the URL: http://www.URL.com and the system obtains a set of URLs one of which is the URL http://www.URL.com. Now, the comparing step 65 matches the obtained URL and the URL in the database of categorized URLs. Once a match occurs the system removes the URL from the group of URLs at step 120 and provides the other URLs to the user at step 70.

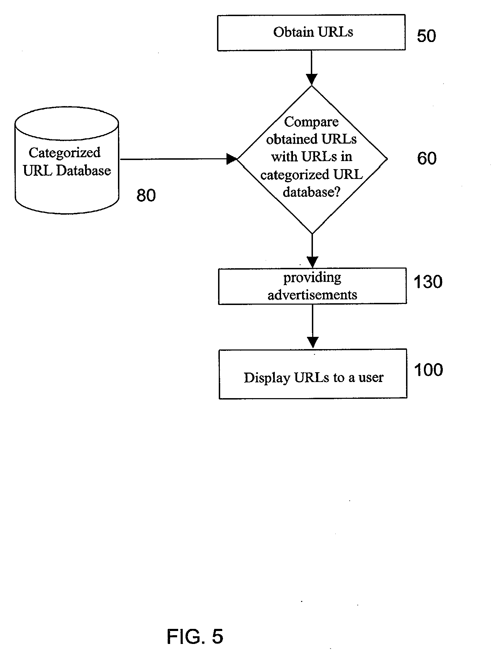

FIG. 5 shows the flowchart that represents the method in the flowchart of FIG. 2 and adds the additional step of providing advertisements or other content 130 prior to the displaying step 100. For example, the displaying step 100 may display the URLs in a list on a webpage. In this example, advertisements are included on the webpage along with the URLs. Ideally, the advertisement will coincide with the content on the webpages associated with the URLs. The displaying step may also display advertisements with the list of URLs. These advertisements may be associated with the content of the search request. For example, if a user searches for "Utah Jazz basketball," the returned search results may also include advertisements for Utah Jazz basketball tickets, sweatshirts or posters. Thus, the advertisements are targeted to the interests of the user. These advertisements may be text, images, videos, audio or any combination thereof. The ads may be associated with links to other webpages that include more information or opportunities to purchase.

The advertisements in the embodiments of the present invention may be included by a third party advertisement clearing house such as Overture®. The ads may be directed for positioning on the screen, directed to specific webpages or for specific content. The ads may vary according to search request or according to obtained URLs. A number of different ways of displaying advertisements are known. Furthermore, the means by which advertisements are paid for may also vary. For instance, the fee may vary according to the time of day, the search request, the number of ads displayed, the size of the ad, the duration of the ad, etc. Furthermore, advertisements may be placed in front of a user in a fair ordering. That is, ads may be placed in front of a user regardless of the fee they pay for the advertisements.

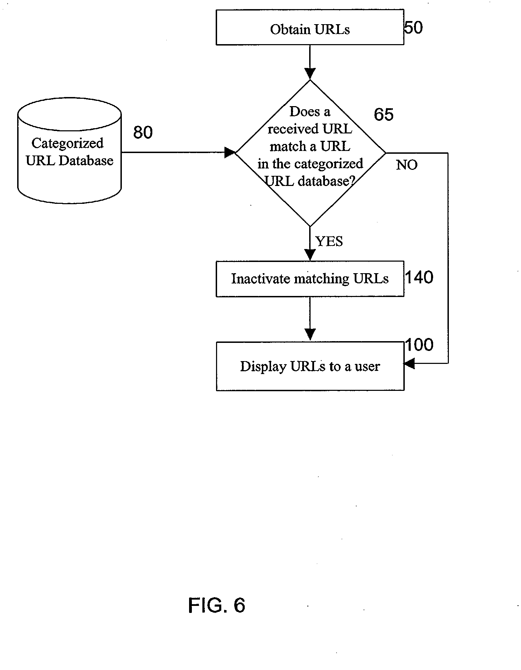

FIG. 6 shows a flowchart representing another embodiment of the present invention. The method represented by this flowchart inactivates matched URLs in step 140 rather than marking matched URLs prior to the displaying step 100, as in FIG. 3. In this embodiment, if the URL http://www.URL.com is in the database of categorized URLs and is obtained in step 50, then this URL will be inactivated prior to the displaying step 100. An inactivated URL in this embodiment cannot be selected or followed to its associated webpage; thus, the user is isolated from the categorized content on the webpage, while still being informed about the existence of the matched webpage.

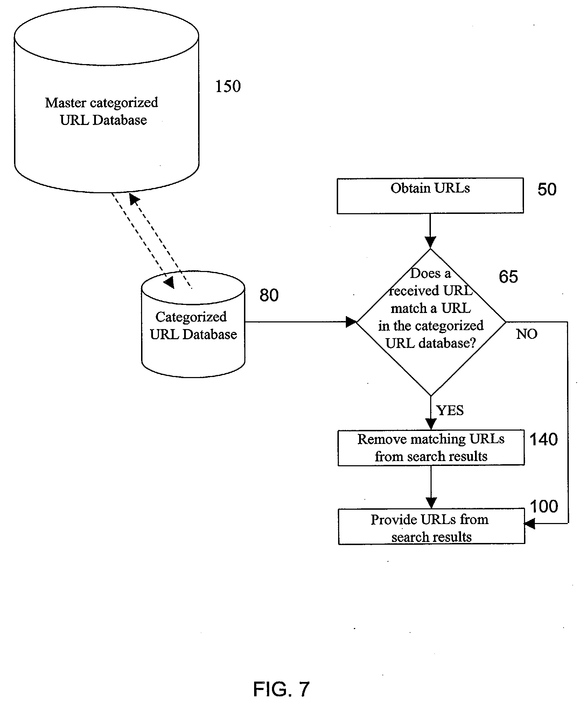

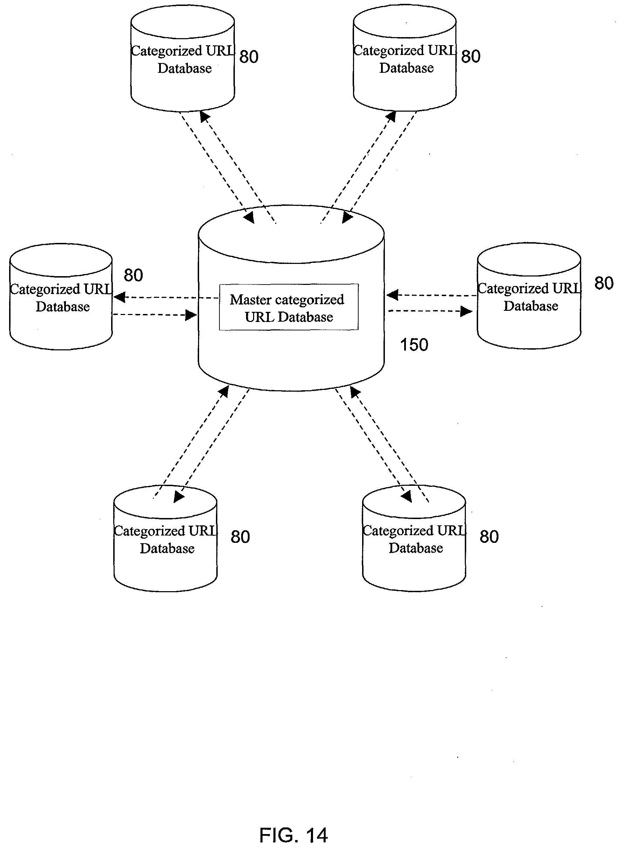

FIG. 7 extends the method represented in the flowchart of FIG. 4 by including a master categorized URL database 150 in communication with a categorized URL database 80. This master categorized URL database 150 sends updates to the categorized URL database. As new URLs are deemed to be associated with categorized content, the categorized URL database 80 is updated from a master categorized URL database 150. This update occurs regularly and may be based on the extremity of the updates. For example, if a new web based threat, such as a virus, is spreading across the Internet, the update may be triggered more quickly and, in one embodiment, immediately. The regularity of the updates may also be controlled by software that allows the user to elect the periodicity of automatic updates. A user may also select to only allow manual updates. The user may also select to have updates at specified intervals, for example, sent about hourly, about daily, or about weekly. The dashed lines in the flowchart between the master categorized URL database 150 and the categorized database 80 represent a remote communication method such as a network or the Internet. For example, the master categorized URL database 150 is located in a remote location on an Internet accessible server and it sends updates to a plurality of categorized URL databases 80 across the Internet as depicted in the embodiment of FIG. 14.

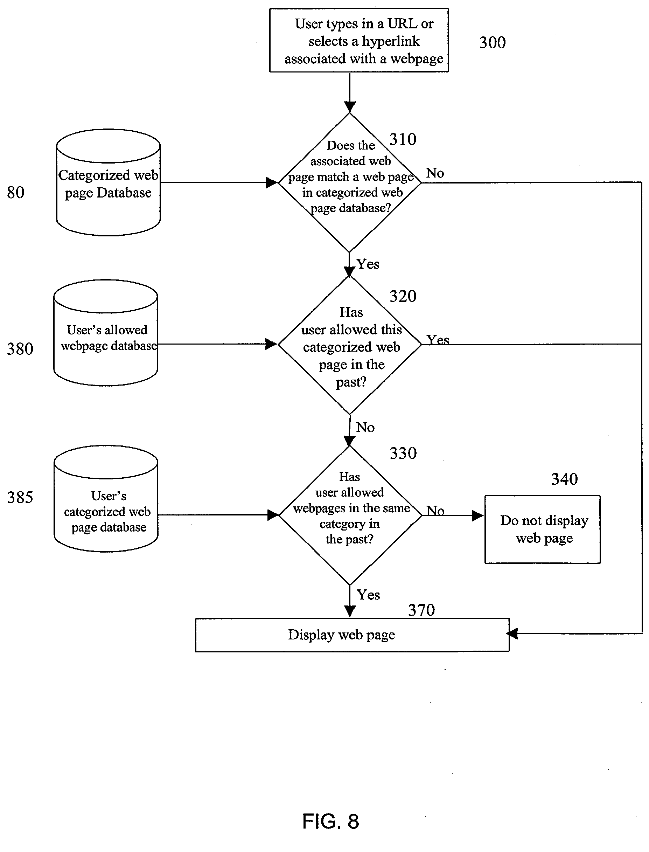

FIG. 8 is a flowchart that represents another embodiment of the present invention. This method begins when a user types in a URL or selects a hyperlink 300. For example, the user may type a URL in the address bar of a web browser, or the user may select hypertext associated with a URL in a web browser. By typing in a URL or selecting hypertext, a webpage is returned over the Internet. The method then determines in step 310 whether the webpage matches a webpage in the categorized webpage database 81. If the webpage does not match a webpage in the database of categorized webpages then the webpage is displayed 370. If the webpage matches, then the method determines whether the user has allowed this categorized webpage in the past at step 320. This step is conducted by comparing the webpage against the user's database of allowed webpages 380. If the user has allowed this webpage in the past, then the webpage is displayed 370. If the user has not allowed this webpage in the past, then the software program determines whether the user has allowed webpages in the same category in the past at step 330. If the user has not allowed webpages in the same category in the past 330, then the webpage is not displayed 340. Step 330 is determined by comparing the category of the webpage against categorized webpages in the user's categorized webpage database 385. If the user has allowed webpages in the same category in the past, then the webpage is displayed 370. Databases 80, 380 and 385 do not need to be separate databases, although they may be. They are shown here as separate databases for descriptive simplicity purposes only.

For example, suppose a user types in, for the first time, the URL http://www.URL.com and the associated webpage is in the categorized webpage database 80. At step 310, the method will determine that the webpage is in the categorized webpage database 80. At step 320, because the user has never visited the webpage in the past, it is not in the allowed webpage database 380. Therefore, the method will move on to step 330. At this step, if the user has visited webpages from the same category in the past, then the webpage will be displayed 370, if not, the webpage will not be displayed 340.

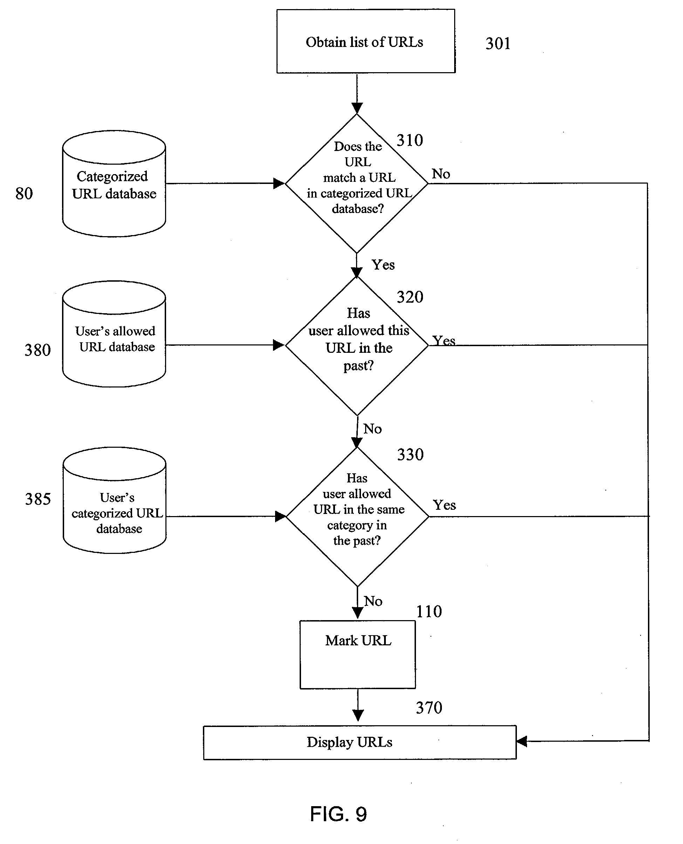

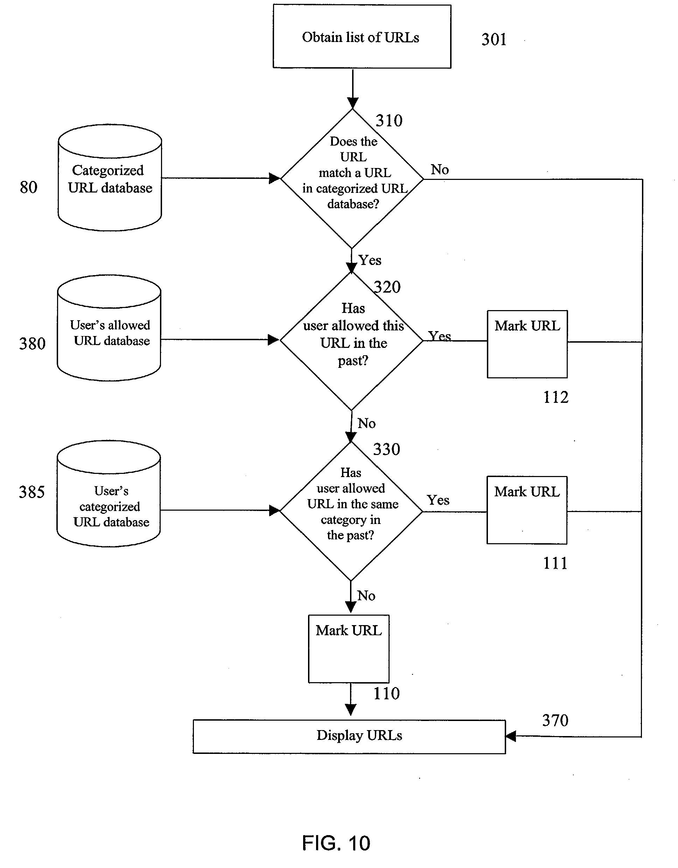

FIG. 9 extends the method represented in the flowchart of FIG. 8. In this embodiment, a user obtains a list of URLs 301. Steps 311, 321 and 331 perform the same functionality as 310, 320, and 330, in FIG. 8 except on a URL rather than a webpage. After step 331, URLs are marked as not being in the user's allowed URL database 380 or user's categorized URL database 385 at step 110. A further extension of this method is shown in the flowchart of FIG. 10. URLs are marked as in FIG. 8, but each is marked as being in the categorized URL database 80 in step 112. URLs are marked as not in the user's allowed URL database 380 in step 111. URLs are also marked as not in the user's categorized URL database 385 in step 110. Thus the user knows whether the URL is in the categorized URL database, whether they have allowed the URL in the past, or whether they have allowed similar URLs in the past.

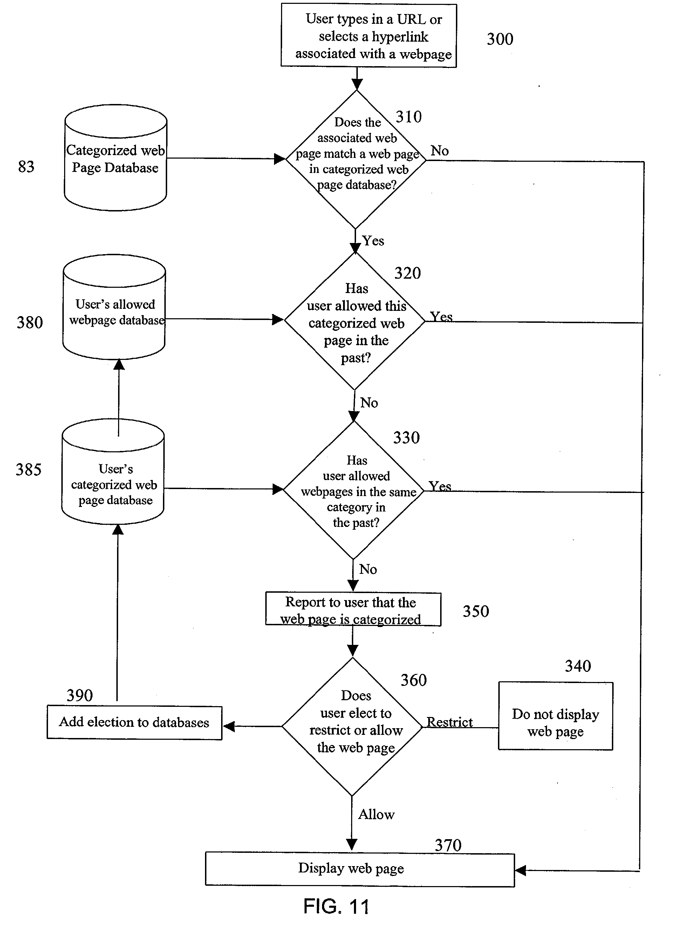

FIG. 11 extends the method represented in the flowchart of FIG. 8 by reporting to the user 350 that a webpage is in the categorized webpage database 83. The user may then choose to allow or restrict the webpage at step 360. If the user elects to restrict the webpage, it is not displayed. If the user decides to allow the webpage, then the webpage is displayed 370. Whatever the choice, the results are stored via step 390 in the user's allowed webpage database 380 and the user's categorized webpage database 385. A further function, not shown in the flowchart, may allow the user to view the webpage but not store the results of the decision to restrict or allow the webpage. A further function allows the user to allow or restrict the webpage after the webpage has been viewed. Thus, a user may restrict or allow webpages and/or content so that they may always be allowed or always restricted. The user's choices may be saved in a user profile so that multiple users on a single computer may restrict or allow user specific webpages.

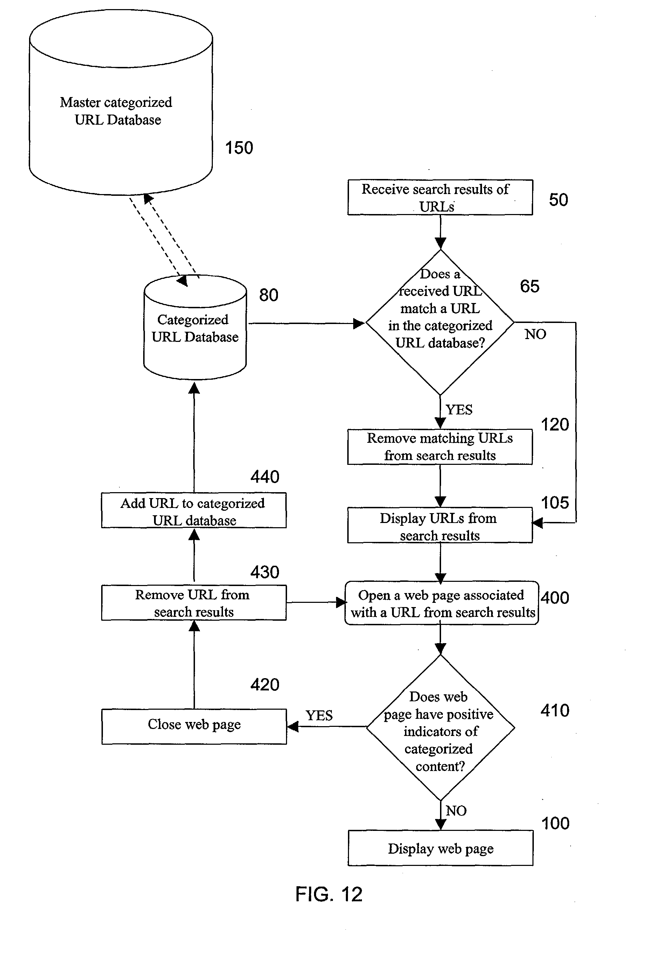

FIG. 12 is a flowchart representing another embodiment of the present invention. The method begins by receiving search results in the form of URLs 50. The method then determines, in step 65, whether the URLs match those in the categorized URL database 80. If the URL matches another URL in the database, then that URL is removed from the search results in step 120. If the URL does not match a URL in the categorized URL database 80, then the method proceeds directly to displaying the URL at step 105. A webpage associated with a URL is then opened 400. Either the user opens the webpage or the webpage is opened automatically by the software program. The process then determines whether this webpage has positive indicators of categorized content 410. For example, the webpage may contain vulgarity that is found by performing a word search of the page's contents. If there are no positive indicators of categorized content in step 400, the webpage is displayed 410. If there are positive indicators of categorized content then the webpage is closed 420. The URL is removed from the search results 430, and the URL is added, 440 to the categorized URL database 80. The categorized URL database 80 communicates the new addition to the master categorized URL database 150 over the Internet or by other ways.

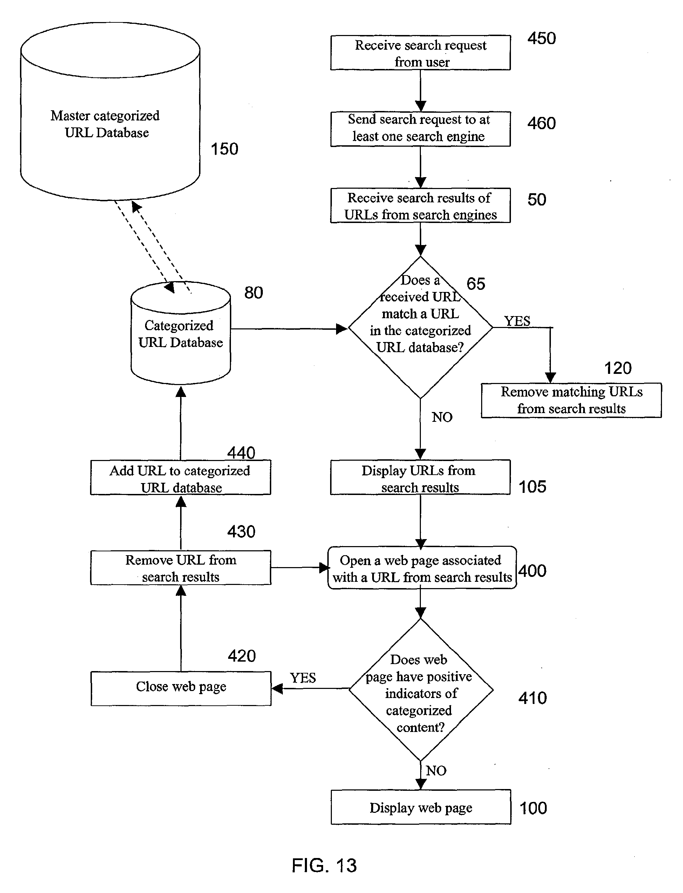

FIG. 13 extends the method represented in the flowchart of FIG. 12 by including the steps of receiving a search request from a user 450 and sending this request to a search engine 460 prior to obtaining the URLs.

FIG. 14 shows a plurality of categorized URL databases 80 in communication with one master categorized URL database 150. The master categorized URL database 150 contains the most current list of categorized URLs. Each of a plurality of categorized URL databases 80 may be updated with new URLs or categories by the master URL database 150. This database may also be updated with new URLs from a categorized URL database as users add new categorized URLs to their categorized URL database 80. The master categorized URL database may update a plurality of categorized URL databases with new categorized URLs, content or webpages. This update may occur regularly and may be based on the extremity of the updates. For example, if a new web based threat, such as a virus, is spreading across the Internet, the update may be triggered more quickly and, in one embodiment, immediately. The regularity of the updates may also be controlled by software that allows the user to elect the periodicity of automatic updates. A user may also select to only allow manual updates. The user may also select to have updates at specified intervals, for example, sent about hourly, about daily, or about weekly. The dashed lines in the flowchart between the master categorized URL database 150 and the categorized database 80 represent a remote communication method such as a network or the Internet. For example, the master categorized URL database 150 is located in a remote location on an Internet accessible server.

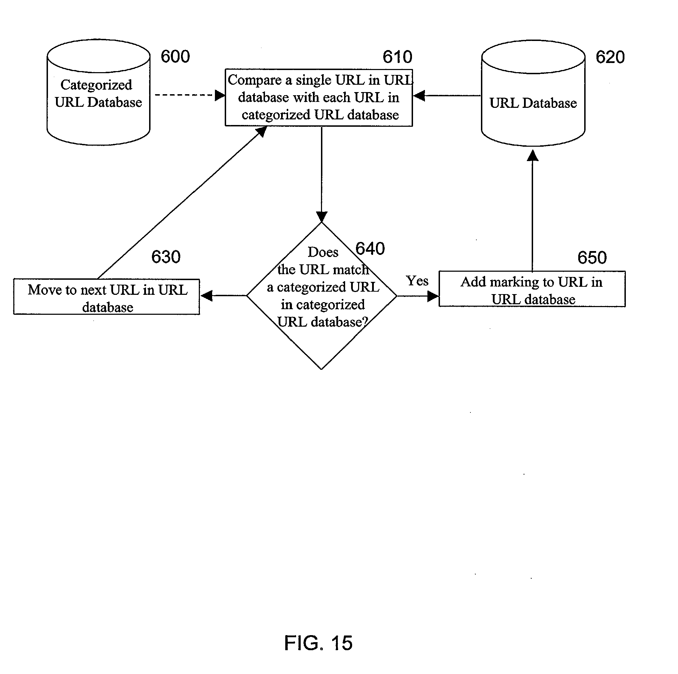

FIG. 15 is a flowchart representing another aspect of the present invention. In this aspect, a single URL in a URL database 600 is compared against a categorized URL database 600 in step 610. Step 640 determines whether or not a URL in the URL database 620 matches a URL in the categorized URL database 600. If a match is found, then the URL in the URL database is marked showing a match 650. If a match is found or not found, the processes moves to the next URL 630. The dashed line between the categorized URL database 600 and step 610 represents that the categorized database may be connected remotely across a network, through the Internet, or through an intranet. The URL database 620 may be a simple file or a large commercial database like those used by search engines.

The methods of the present invention may be implemented by a software program stored on a computer that provides a means for, among other things, obtaining URLs, comparing the obtained URLs against a database of categorized URLs, and providing these URLs to a user in a number of different ways. For example, the software program may also interface with a user through an internet browser toolbar that works in conjunction with an existing web browser such as Internet Explorer® Netscape Navigator®, Watermelon®, XANA®, Camino®, Safari®, Mozilla Firefox®, America Online®, Lynx®, Konqueror®, or Opera®. This toolbar exists as an additional set of user interfaces on the web browser. For example, these interfaces may include buttons, icons, pull-down menus, text entry fields, or any standard or custom GUI interface.

For example, the toolbar provides a text entry field whereby a user sends search requests to one or more Internet search engines. The software program receives a search request from the text entry field and sends it to one or more Internet search engines. The software program then receives the search results from the one or more search engines and compares the URLs in the search results against a categorized URL database. Once the search results have been compared, the results are displayed to a user in the Internet browser window.

The toolbar may alternatively allow the user to select from a variety of search engines to send the search query. The query may also be sent to more than one search engine. One or more search engines, for example, may be selected from Yahoo!®, google®, Ask Jeeves®, AllTheWeb.com®, HotBot®, Teoma®, AltaVista®, Gigablast®, LookSmart®, Lycos®, MSN Search©, Netscape search®, AOL Search®, Excite®, about.com®, WebCrawler®, Mamma The Mother of all Search Engines®, or PeopleSearch®.

The toolbar may also, for example, have buttons, pull down menus, icons, GUI dialogue windows or any other GUI interface that allow a user to change the software program's features. For instance, a user may select which internet search engines to send the search request. The user may also select whether to allow or restrict a category of categorized webpages. The user may also select, for example, a button that places a webpage in a category and updates the categorized URL database with the URL associated with the present webpage. The toolbar may also provide buttons, menus, or windows whereby a user selects different ways to present the search results in the display. The toolbar may also have the means to save a user's profile and/or a password that stores its search and display preferences thereby using the same preferences each time that user uses the toolbar. The program software may also password protect user's preferences.

The displaying step of the above-mentioned methods may occur in a number of different ways. In general, a default marking will appear that may be altered or varied by the user. The user may also change the marking completely. For instance, the user may configure the markings to their preferences. For example, a software program may display a list of URLs with a brief description of the webpage with or without search terms highlighted. The software program may display a single webpage at a time and allow the user to scroll through the webpages or automatically scroll through them like a slide show. In displaying the URLs, the software program may also mark or highlight the URLs that match URLs in the categorized URL database. For example, matched URLs may be highlighted in a different color, or they may have a red flag, red X, or other symbol next to the URL indicating a match. The list of URLs may also be presented with a small image of the webpage associated with the URL. This small image may be enlarged with a pointing device. For example, a user may enlarge the small image by placing the pointer over the image and scrolling with the scroll button on the mouse. As the user scrolls in one direction, the image expands in size and the when the user scrolls in the opposite direction, the image shrinks in size. The user may also open the webpage by clicking on the image.

In a further embodiment, the returned URLs, whether obtained from search results or otherwise, are displayed in a template. With a template, the format of the display varies according to the type of URLs in the list. Templates may vary by changing the text font, colors, backgrounds, and/or the like. For example, URLs associated with webpages of song lyrics are displayed with musical notes in the background. URLs associated with webpages for basketball scores may display team logos in the background or basketballs. Also, a user may change templates, create new templates, or import templates from other users. Furthermore, users may be involved in an Internet community where templates may be shared with other users. This community may also allow users to share categories of webpages, databases, and/or toolbar skins or options.

The categorized URL database, the user's allowed URL database, and the user's categorized URL database may function in conjunction with the user's cookies, Favorites, or web history stored on the user's hard drive or on removable storage media such USB flash. For example, the URLs stored in the user's Favorites are included in the user's allowed URL database and user's categorized URL database. Likewise, URLs associated with cookies and web history may be in both the user's allowed URL database and the user's categorized URL database.

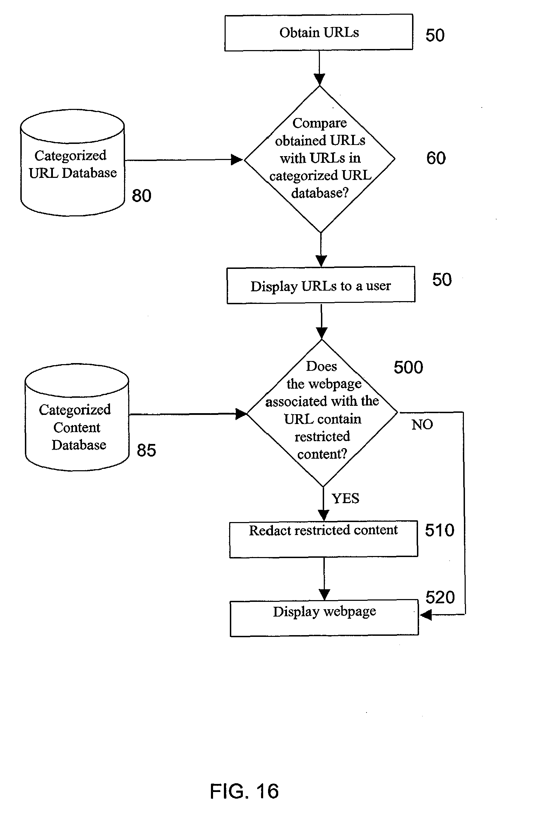

The software program may also perform a redaction function as shown in the embodiment represented by FIG. 16. This figure extends the embodiment of FIG. 2 by including the step of comparing the content of a webpage associated with a URL 500 with content in the categorized content database 85. If the content on the webpage matches content in the categorized content database 85 then only categorized content is redacted 510. After redaction the webpage associated with the URL is displayed 530.

For instance, a user may visit a webpage with vulgar language. The software program will find the vulgar language and, for example, replace each character of the vulgar word with either an "X" or completely black out the word. For example, suppose the word "lingerie" offends a user and they visit a webpage with the phrase "She wore lingerie." The software program will find this word in the text and replaces it as "She wore XXXXXXXX." The software program may also find offensive images. Such images, for example, may not be displayed or may be blacked out or replaced with an advertisement. The software program finds vulgar language by performing a text search prior to displaying the webpage. The software program finds offensive images by the description or title of the image or by artificial intelligence algorithms that are able to determine such things as nudity in an image.

This redaction function may redact any material offensive to a user. A category of content may be redacted from each page. For example, a user may redact images, text, audio, or video of violence, pornography, nudity, vulgarity, obscenity, offensive material, racism, hatred, or the like. Furthermore, users may adapt their system to redact anything that the user may not want presented on their screen. For instance, a user may be especially sensitive to reports of child abuse and may have all such reports redacted from their webpages. In another embodiment, a user may find thoughts of the 9/11 terrorist attacks quite offensive and disturbing and may have all related content redacted. The software program is setup in such away that a user may choose what may be redacted by specific instances or by selecting categories of content.

The categorized URL database used throughout the embodiments of the present invention may be collected from user feedback, manual input of known categorized URLs, automated input from web crawlers, third party feedback, and/or updates from third party compilations. For instance, a user may come across a webpage that is not in the categorized URL database but includes categorized content. The user may then report the webpage as having categorized content. The URL associated with the webpage is then added to the categorized URL database and is passed on to the master categorized URL database. The master categorized URL database passes this URL and any other updates along to other categorized URL databases.

In one specific embodiment of the present invention a user installs a PCsafe™ internet browser toolbar. Once installed, this toolbar is placed on the users Internet Explorer® toolbar. The toolbar provides the user a data entry field where the user types in a search request, a pull down menu where a user may select from a list of saved profiles, a button to allow or restrict web pages, and a menu to select the type of content or web pages the user elects to restrict. The browser further provides the user the ability to choose from predetermined lists of categorized content that they wish to allow or restrict. In this example, the user selects to restrict all pornographic images, all spyware, all adware, and all phishing webpages. These selections may have been saved in the user's saved profile, so that when the user selects their profile from the pull down menu and they enter their password these selections are made automatically. Within the toolbar, the user also selects the search engines from which the user wishes to have search results returned. For simplicity only, in this example the user selects to have search results returned from google®.

The user may search the internet for webpages, documents, music, videos, images, etc., by entering a search query in the data entry field of the toolbar. The search query, in this example, sends the query to the google® search engine wherein search results are returned. Prior to providing these results to the user the software filters the results. In this example, the user elected to filter webpages that include pornography, adware, spyware, or phishing pages, hence, these search results are filtered. The filtered search results are still provided to the user but are inactive. As such, the entire list of returned search results are displayed to the user with the links to the filtered webpages inactivated. Inactive links to webpages are listed but if the user clicks on the link, the webpages is not opened. The user is protected from opening these webpages that contain restricted content in the categorized database.

Now, the user may select and open active webpages from the search results. Suppose, the user selects one active webpage from the results. The webpage is opened. If, while browsing the webpage, the user notices restricted content, the user may select a button on the toolbar that characterizes the webpage as containing categorized content. For instance if the user notices the webpage has spyware the user may click on the spyware button on the toolbar. Once selected, the webpage is entered into the database of categorized webpages specifically in the spyware category. The software may then return the user to the listing of search results. Later, the database of restricted webpages updates the master database of categorized webpages across a network by adding this webpage.

In the above specific example a few options were demonstrated. These options do limit the breadth of the present invention but are presented only to show one example of the present invention. For instance the user may elect to restrict or allow different categories of webpages or content. Different and/or multiple search engines may be used to obtain search results. Filtered search results may be visibly marked, they may be active, or completely removed from the search results.

Categorized content currently includes most of the presently constituted malicious Internet based threats a computer may face and most of the offensive content likely found on the Internet. It is likely that new, unforeseen, and unspecified Internet related threats will present themselves to users. Such threats are in harmony with the threats of the present invention and are included herewith. Also, any other offensive or obscene material may likewise be included. Furthermore, it is to be understood that any mention of categorized content and/or categorized webpages are not meant as a limitation.

The methods described above may be implemented in a software program that is saved on a computer and executed by an operating system without limitation. The software program may be recorded on a recordable medium such as a floppy disk, hard drive, CD, DVD, flash, ROM, or any other recordable medium. The software program may also be available for download from an Internet webpage, transferable by electronic means to a user's computer, installable on a computer, and operable. Once installed such a software program performs the methods of the present invention. Furthermore, the methods may be performed on any operating system, including, but not limited to Macintosh® operating systems, Unix®, or Windows® type systems.

The above-mentioned descriptions of the many embodiments of the present invention describe methods that operate on URLs, webpages, and/or content. Wherever URLs are mentioned one skilled in the art will know how to easily substitute webpages or content. Likewise, URLs may be substituted for webpages or content. Furthermore, content and webpages are interchangeable. Those skilled in the art will understand situations where it may or may not be practical or proper to substitute one for another. Therefore, wherever these terms are used, they are used with the broadest intent and may be interchanged without deviating from the spirit of this invention. Indeed, the methods of the present invention cover all such aspects regardless of the described use of URLs, webpages, or content.

## Claims

1. A method comprising:
obtaining webpages from one or more web search engines in response to a search request;
comparing said webpages against a database of categorized webpages, wherein said categorized webpages comprise two or more categories of webpages selected from the group consisting of webpages with adware, webpages with spyware, phishing webpages, webpages with tracking software, webpages with web browser hijackers, webpages with viruses, webpages with Trojan horses, and webpages with worms; and
providing webpages from said comparing step.

2. A system comprising:
a first module configured to obtain webpages from one or more search engines in response to a search request;
a second module configured to compare said webpages against a database of categorized webpages, wherein said categorized webpages comprise two or more categories of webpages selected from the group consisting of webpages with adware, webpages with spyware, phishing webpages, webpages with tracking software, webpages with web browser hijackers, webpages with viruses, webpages with Trojan horses, and webpages with worms, said database of categorized webpages preferably further comprising webpages with content selected from one or more of the group consisting of banners, spiders, adult content, pornography, violence, vulgarity, spam, spim, sponsored webpages, pop-ups, spammed webpages, and pop-unders.; and
a third module for providing webpages from said search results.

3. The system of claim 2 further comprising:
a fourth module for analyzing search results that do not match one or more entrants in a database of categorized content; and
a fifth module for reporting newly discovered categorized webpages comprising categorized content to said database of categorized webpages.

4. A method comprising:
obtaining webpages from one or more search engines in response to a search query;
identifying categorized webpages in said search results from a database of categorized webpages, wherein said categorized webpages comprise two or more categories of webpages selected from the group consisting of webpages with adware, webpages with spyware, phishing webpages, webpages with tracking software, webpages with web browser hijackers, webpages with viruses, webpages with Trojan horses, and webpages with worms;
parsing said categorized webpages from webpages obtained from said obtaining step; and
providing webpages from said search results.

5. The method of claim 4, wherein said database of categorized webpages further comprise webpages with content selected from one or more of the group consisting of banners, spiders, adult content, pornography, violence, vulgarity, spam, spim, sponsored webpages, pop-ups, spammed webpages, and pop-unders.

6. A method comprising:
obtaining URLs from one or more web search engines in response to a search request;
comparing said URLs against a database of categorized URLs, wherein said categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms; and
providing URLs from said search result.

7. The method of claim 6, wherein said database of categorized URLs further comprise one or more URLs linked to content selected from one or more of the group consisting of banners, spiders, adult content, pornography, violence, vulgarity, spam, spim, sponsored webpages, pop-ups, spammed webpages, and pop-unders.

8. A system comprising:
a first module configured to obtain URLs from one or more web search engines in response to a search request;
a second module configured to determine whether said URLs matches one or more entrants in a database of categorized URLs, wherein said categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms; and
a third module for providing search results.

9. The system of claim 8, wherein said database of categorized URLs further comprise one or more URLs linked to content selected from one or more of the group consisting of banners, spiders, adult content, pornography, violence, vulgarity, spam, spim, sponsored webpages, pop-ups, spammed webpages, and pop-unders.

10. The system of claim 8 or 9 further comprising:
a fourth module for analyzing search results that do not match one or more entrants in a database of categorized content; and
a fifth module for reporting newly discovered categorized URLs to said database of categorized URLs.

11. A method comprising:
obtaining URLs from one or more search engines in response to a search query;
identifying categorized URLs in said search results from a database of categorized URLs, wherein said categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms;
parsing said categorized URLs from URLs obtained from said obtaining step; and
providing webpages from said search results.

12. The method of claim 11, wherein said database of categorized URLs further comprise URLs linked to content selected from one or more of the group consisting of banners, spiders, adult content, pornography, violence, vulgarity, spam, spim, sponsored webpages, pop-ups, spammed webpages, and pop-unders.

13. A method comprising:
comparing a URL against a database of categorized URLs, wherein said categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms; and
providing said URL if it does not match any categorized URLs in said database.

14. A method comprising:
receiving a search request from a user;
sending said search request to at least one search engine;
receiving at least one URLs from said search engines in response to said search request;
comparing said URLs against a database of categorized URLs, wherein said categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms; and
displaying URLs that do not match categorized URLs in said database.

15. A method comprising:
comparing each URL in a database of URLs against each URL in a database of categorized URLs;
marking each URL in said database of URLs that match categorized URLs in said database of categorized URLs, wherein said categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms; and
providing URLs, wherein a marked URL is identified as matching a categorized URL.

16. The method of claim15, wherein said URLs are displayed to a user.

17. The method of claim 15 or 16, wherein said marked URLs are displayed to a user with a visual marker identifying the URL as categorized.

18. The method of claim 15 or 16, wherein said marked URLs are not displayed to a user.

19. A computer readable medium having stored thereon a computer program that, when executed, causes a computer to perform the steps of:
receiving at least one URL;
comparing each URL against a database of categorized URLs, wherein said categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms; and
providing URLs that do not match any categorized URLs in said database.

20. A computer data signal embodied in a transmission medium for enabling a computer to filter search results comprising:
computer readable program code for enabling a computer to receive at least one URL;
computer readable program code for enabling a computer to compare each URL against a database of categorized URLs, wherein said categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms; and
computer readable program code for enabling a computer to provide URLs that do not match any categorized URLs in said database.

21. A computer system comprising:
a processor, and
a memory including software instructions that cause the computer system to perform the steps of:
receiving at least one URL;
comparing each URL against a database of categorized URLs, wherein said categorized URLs point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms; and
providing URLs that do not match any categorized URLs in said database.

22. A method comprising:
obtaining a webpage in response to a user typing in a URL or in response to a user selecting a hyperlink;
comparing said webpage against a database of categorized webpages, wherein said categorized webpages point to webpages from two or more categories of webpages selected from the group consisting of webpages with adware, webpages with spyware, phishing webpages, webpages with tracking software, webpages with web browser hijackers, webpages with viruses, webpages with Trojan horses, and webpages with worms;
displaying said webpage if said webpage is not in said database of categorized webpages; and
reporting to said user if said webpage is in said database of categorized webpages, wherein said user may elect to restrict or allow said webpage.

23. A method comprising:
obtaining search results from one or more web search engines in response to a search request;
comparing content of said results against a database of categorized content, wherein said categorized content is selected from two or more of the group consisting of adware, spyware, phishing webpages, tracking software, web browser hijackers, viruses, Trojan horses, and worms; and
providing said search results after said comparing step.

24. The method of claim 23, wherein said database of categorized content further comprises one or more of the group consisting of banners, spiders, adult content, pornography, violence, vulgarity, spam, spim, sponsored webpages, pop-ups, spammed webpages, and pop-unders.

25. A system comprising:
a first module configured to obtain search results from one or more web search engines in response to a search request;
a second module configured to determine whether content said results match one or more entrants in a database of categorized content, wherein said categorized content is selected from two or more of the group consisting of adware, spyware, phishing webpages, tracking software, web browser hijackers, viruses, Trojan horses, and worms; and
a third module for providing search results.

26. The system of claim 25, wherein said database of categorized content further comprises one or more items selected from the group consisting of banners, spiders, adult content, pornography, violence, vulgarity, spam, spim, sponsored webpages, pop-ups, spammed webpages, and pop-unders.

27. The system of claim 25 or 26 further comprising:
a fourth module for analyzing search results that do not match one or more entrants in said database of categorized content; and
a fifth module for reporting newly discovered categorized content to said database of categorized content.

28. A method comprising:
obtaining search results from one or more search engines in response to a search query;
identifying categorized content in said search results from a database of categorized content, wherein said categorized content is selected from two or more of the group consisting of adware, spyware, phishing webpages, tracking software, web browser hijackers, viruses, Trojan horses, and worms;
parsing said search results identified to contain categorized content; and
providing said search results after said parsing step.

29. The method of claim 28, wherein said database of categorized content further comprises one or more items selected from the group consisting of banners, spiders, viruses, adult content, pornography, violence, vulgarity, Trojan horses, worms, spam, spim, phishing, web browser hijackers, pop-ups, and pop-unders.

30. A method comprising:
obtaining URLs from one or more web search engines in response to a search request;
comparing content linked to said URLs against a database of categorized content, wherein said categorized content is selected from two or more of the group consisting of adware, spyware, phishing webpages, tracking software, web browser hijackers, viruses, Trojan horses, and worms; and
providing URLs from said search request after said comparing step.

31. The method of claim 30, wherein said database of categorized content further comprises content selected from one or more of the group consisting of banners, spiders, adult content, pornography, violence, vulgarity, spam, spim, sponsored webpages, pop-ups, spammed webpages, and pop-unders.

32. A system comprising:
a first module configured to obtain URLs from one or more web search engines in response to a search request;
a second module configured to determine whether content linked to said URLs matches one or more entrants in a database of categorized content, wherein said categorized content is selected from two or more of the group consisting of adware, spyware, phishing webpages, tracking software, web browser hijackers, viruses, Trojan horses, and worms; and
a third module for providing search results.

33. The system of claim 32, wherein said database of categorized content further comprise one or more selected from one or more of the group consisting of banners, spiders, adult content, pornography, violence, vulgarity, spam, spim, sponsored webpages, pop-ups, spammed webpages, and pop-unders.

34. The system of claim 32 or 33 further comprising:
a fourth module for analyzing search results that do not match one or more entrants in said database of categorized content; and
a fifth module for reporting newly discovered categorized content to said database of categorized content.

35. A method comprising:
obtaining URLs from one or more search engines in response to a search query;
identifying whether content linked to said URLs matches one or more entrants in a database of categorized content, wherein said categorized content is selected from two or more of the group consisting of adware, spyware, phishing webpages, tracking software, web browser hijackers, viruses, Trojan horses, and worms;
parsing URLs identified in said identifying step from URLs obtained from said obtaining step; and
providing webpages from said search results after said parsing step.

36. The method of claim 35, wherein said database of categorized content further comprise one or more selected from one or more of the group consisting of banners, spiders, adult content, pornography, violence, vulgarity, spam, spim, sponsored webpages, pop-ups, spammed webpages, and pop-unders

37. A method comprising:
obtaining results from one or more web search engines in response to a search request;
comparing content of said results against a database of categorized content, wherein said categorized content is selected from two or more of the group consisting of adware, spyware, phishing webpages, tracking software, web browser hijackers, viruses, Trojan horses, and worms; and
providing search results after said comparing step.

38. The method of claim 37, wherein said database of categorized content further comprises one or more of the group consisting of banners, spiders, adult content, pornography, violence, vulgarity, spam, spim, sponsored webpages, pop-ups, spammed webpages, and pop-unders.

39. A method comprising:
obtaining search results from one or more search engines in response to a search query;
identifying categorized content in said search results from a database of categorized content, wherein said categorized content is selected from two or more of the group consisting of adware, spyware, phishing webpages, tracking software, web browser hijackers, viruses, Trojan horses, and worms; and looking for identifiers in said search results associated with categorized content;
parsing said search results identified to contain categorized content; and
providing search results after said parsing step.

40. The method of claim 39, wherein said database of categorized content further comprises one or more items selected from the group consisting of banners, spiders, adult content, pornography, violence, vulgarity, spam, spim, sponsored webpages, pop-ups, spammed webpages, and pop-unders.
